# FASCICULE DE BREVET EUROPEEN

(11) **EP 2 188 215 B1**
(45) Date de publication et mention de la délivrance du brevet: **22.06.2011**
(21) Numéro de dépôt: 08836557.2
(22) Date de dépôt: 10.09.2008
(51) Int. Cl.: C02F 1/24, B03D 1/24

(54) **PROCEDE DE SEPARATION SOLIDE/LIQUIDE D'EFFLUENT ET SEPARATEUR POUR SA MISE EN OEUVRE**
VERFAHREN ZUR FLÜSSIGKEITS-/FESTSTOFFTRENNUNG IN ABWÄSSERN SOWIE DAZUGEHÖRIGE TRENNVORRICHTUNG
METHOD FOR EFFLUENT SOLID/LIQUID SEPARATION AND SEPARATOR FOR CARRYING OUT THE SAME

(30) Priorité: 12.09.2007 FR 0757510
(43) Date de publication de la demande: 26.05.2010
(73) Titulaire: Beaulieu, Bernard, 07110 Chassiers (FR)
(72) Inventeur: Beaulieu, Bernard, 07110 Chassiers (FR)
(74) Mandataire: Herrburger, Pierre
(86) Numéro de dépôt international: PCT/FR2008/051610
(87) Numéro de publication internationale: WO 2009/044074

(56) Documents cités:
- DE-A1- 2 552 228
- US-A- 3 932 282
- US-A- 5 814 228
- US-A1- 2003 000 895

## Description

### Domaine de l'invention

La présente invention concerne un procédé de séparation solide/liquide pour nettoyer un effluent selon le préambule de la revendication 1.

L'invention concerne également un séparateur solide-liquide, continu, tel que dégraisseur, formé d'une cuve recevant l'effluent chargé, pour entraîner par un mouvement ascensionnel de bulles d'air, les produits de l'effluent vers la surface de l'effluent dans la cuve selon le préambule de la revendication 4.

### Etat de la technique

I1 existe différents types d'appareils dégraisseurs servant à séparer les solides des liquides, notamment les huiles et les graisses. Un tel dégraisseur connu se compose d'un caisson recevant l'effluent à dégraisser, notamment de l'eau. Au milieu de ce dégraisseur, il est prévu un aérateur pour diffuser de fines bulles d'air pour entraîner les particules grasses ou huileuses à la surface du bain. Ces éléments floculés en surface sont évacués par un dispositif mécanique. Dans ce dispositif, une jupe de tranquillisation est installée à l'intérieur de la cuve et reçoit l'aérateur.

Il existe également un dégraisseur aéré et raclé qui utilise un principe de séparation mécanique avec injection d'air. Ce dégraisseur est constitué par un réservoir dans lequel est immergée une turbine destinée à aspirer de l'eau et de l'air. L'air est finement divisé par le mouvement du stator de la turbine engendrant des bulles fines d'un diamètre de 1 à 2 mm remontant dans le liquide et entraînant avec elles les particules de graisse ou autre. Les éléments flottant en surface sont évacués par un racleur alors que les parties lourdes s'accumulent au fond dont ils sont évacués.

Il existe également un procédé et une installation du type défini ci-dessus selon le document DE 2552228. Ce document décrit une installation formée d'une cuve composée d'un premier volume délimité par une paroi cylindrique verticale et un second volume compris entre ce premier volume intérieur et la paroi de la cuve. Le fond de la cuve est de forme conique et le volume intérieur communique avec le volume périphérique par des orifices prévus près de la base de la paroi délimitant le volume intérieur.

Cette cuve est alimentée en effluent par une entrée d'effluent débouchant dans le volume périphérique en dessous d'un certain niveau. Au-dessus de ce niveau, le volume périphérique est muni d'une sortie de liquide.

Une buse 5 fonctionnant comme buse à jet est placée dans le volume intérieur, dans la partie inférieure de celui-ci pour émettre un jet de liquide sous pression de forme conique et entraîner l'effluent vers le haut. Il est prévu également un dispositif 6 permettant d'additionner des agents tensioactifs.

Comme le liquide sous pression contient de l'air dissout, à la sortie de la buse il y a détente de liquide provoquant une expansion rapide avec émission de petites bulles d'air.

Cette installation fonctionne grâce à une forme conique, prononcée du jet et à la vitesse élevée du jet de liquide sous pression. Ces deux caractéristiques sont sensées éviter que les petites bulles d'air ne s'agglutinent et forment des bulles de grandes dimensions.

Cette installation prévoit un débordement du liquide dans la partie supérieure du volume intérieur 4 pour passer dans le volume périphérique d'où une fraction de liquide est extraite et l'autre fraction du liquide est recyclée. Mais il n'y a pas de séparation entre le liquide épuré et l'effluent en entrée de sorte qu'il n'est pas exclu qu'une fraction de l'effluent passe directement de l'entrée vers la sortie sans passer par le volume intérieur. Cela se produit si la pompe à jet 5 fonctionne mal ou est arrêtée ou encore lorsque l'arrivée d'effluent est coupée ; la cuve se vide au moins partiellement, l'effluent passant directement par la sortie.

Enfin, il n'y a pas de séparation préliminaire avec dépose des parties lourdes chargeant l'effluent au fond de la cuve puisque l'arrivée de l'effluent dans le volume intérieur se fait pratiquement au niveau du fond sans ralentissement à priori de la vitesse ou mise en circulation de l'effluent pour favoriser la dépose des matières lourdes, avant d'être aspiré par la pompe à jet 5.

En conclusion, ce dispositif de séparation solide/liquide est d'un fonctionnement incertain, ne permettant pas une séparation régulière et efficace pour le nettoyage de l'effluent ; il consomme beaucoup d'énergie.

Ainsi, les installations de l'état de la technique actuel utilisent deux catégories de bulles dans le génie des procédés :
- les fines bulles caractérisées par un diamètre compris entre 1 et 2 mm, dont la production est utilisée pour les dégraisseurs aérés,
- les microbulles de diamètre inférieur à 100µ, utilisées dans les flotateurs à air dissous ou clarificateurs de boues selon la technique de « pressurisation détente » ou en électroflotation.

Ces deux procédés ont des rendements épuratoires de l'ordre de :
- dégraisseur aéré : 6 à 10 % de la DCO des eaux brutes, 15 à 20 % des lipides des eaux brutes et 15 à 20 % des MES,
- flotateur à air dissous : 40 % de la DCO, 95 % des lipides et 60 % des MES.

En résumé, les séparateurs et dégraisseurs connus ont l'inconvénient de consommer beaucoup d'énergie pour leur fonctionnement et les principes qu'ils appliquent ne permettent pas une séparation très efficace des graisses.

### But de l'invention

La présente invention a pour but de développer un procédé et une installation permettant une séparation plus efficace pour nettoyer un effluent et récupérer de l'eau nettoyée tout en consommant moins d'énergie que les installations et procédés actuels.

### Exposé et avantages de l'invention

A cet effet, la présente invention concerne un procédé de séparation solide/liquide du type défini ci-dessus caractérisé en ce qu'
- on forme un mélange d'air sous pression réglée et d'eau sous pression réglée,
- on fait passer le mélange dans un diffuseur en partie basse du bain d'effluent,
- on crée dans le bain, une colonne d'effluent à courant ascensionnel entraîné par le fluide vecteur sortant du diffuseur,
- on évacue la charge séparée de l'effluent dans la partie supérieure du bain.

Ce procédé permet de réaliser un contact gaz/liquide par injection d'un mélange eau/air diffusé et qui consomme très peu d'énergie ; le liquide vecteur diffusé dans la colonne d'effluent contient des microbulles sans coalescence ni effet de paroi. Ces microbulles circulent à co-courant dans l'effluent et à des vitesses permettant de réaliser une colonne de fluide d'encombrement réduit. Cette colonne d'effluent est délimitée géométriquement par un moyen matériel sur toute la hauteur ou au moins sur une grande partie de sa hauteur.

Selon l'invention, le mélange eau/air sous des pressions réglées, formé avant le passage dans le diffuseur, permet de créer des microbulles de quelques microns jusqu'à de fines bulles d'un diamètre supérieur au millimètre.

Des essais du procédé ont montré que l'on pouvait atteindre des performances de l'ordre de 60 à 90 %"du rendement épuratoire avec un encombrement réduit d'au moins 50 %.

On améliore le procédé de séparation en ce qu'on ralentit le mouvement ascensionnel de la colonne d'effluent en partie haute pour calmer le flux en augmentant la section de la colonne de fluide et en laissant remonter les flocons séparés jusqu'au niveau du bain et on extrait l'eau épurée sous le niveau du bain et de façon régulièrement répartie.

Suivant une caractéristique avantageuse, on règle la pression de l'air à un niveau inférieur à 0,5 bar et la pression de l'eau à environ 2 bars.

L'invention concerne également une installation, c'est-à-dire un séparateur solide/liquide du type défini ci-dessus caractérisé par
- une cheminée avec une entrée à sa base recevant l'effluent à sa base et une sortie dans partie supérieure,
- une entrée de fluide vecteur à la base de la cheminée, reliée à une alimentation en un mélange d'air sous pression réglée et d'eau sous pression réglée, par un diffuseur, pour créer une colonne d'effluent et de fluide vecteur animée d'un mouvement ascensionnel non turbulent, entraînant et agglutinant les produits chargeant l'effluent vers la surface du bain dans la cuve,
- la sortie en partie haute de la cheminée ayant
   * une partie évasée,
   * suivie d'une surface de dépose des produits entraînés, sous le niveau du bain dans la cuve, au-dessus de la cheminée, et
   * une sortie d'eau nettoyée sous la surface de dépose des produits.

Ce séparateur est avantageusement complété par un décanteur avec une arrivée d'effluent de type vortex, pour déposer les matières solides les plus lourdes sous forme de boues, ce décanteur étant relié par sa partie haute, à l'entrée de la cheminée au-dessus du centre du vortex.

Pour favoriser une séparation plus poussée au niveau du décanteur, sa paroi équipée, dans la zone du vortex, de pales anti-vortex. Ces pales ralentissent la circulation périphérique du vortex pour favoriser le dépôt des matières lourdes éjectées dans le courant périphérique du vortex, pour qu'elles puissent descendre le long de la paroi de la cuve et des pales et arriver dans le collecteur de boues à la base du décanteur.

Suivant une caractéristique avantageuse, la sortie d'eau nettoyée se fait par un siphon de manière à maintenir le niveau du bain dans la cheminée, légèrement au-dessus de la surface de dépose des boues flottant à la surface du bain.

Suivant une autre caractéristique avantageuse, la cheminée est un élément tubulaire dont la partie inférieure, perforée, débouche dans le décanteur dans la zone d'effluent stabilisé et homogénéisé et la sortie en partie supérieure de la cheminée, présente une forme évasée, conique pour ralentir le courant ascensionnel à la sortie de la cheminée et favoriser le regroupement des matières séparées dans la colonne de la cheminée, vers la sortie de boues.

Suivant une autre caractéristique avantageuse, l'arrivée d'eau sous pression est munie d'un régulateur et l'arrivée d'air sous pression est munie d'un régulateur de pression, ces deux régulateurs étant indépendants, l'arrivée d'eau étant notamment réglée à une pression d'environ 2 bars et le régulateur de l'arrivée d'air est réglé à une pression beaucoup plus faible, inférieure à 0,5 bar.

De façon avantageuse suivant une autre caractéristique, le séparateur est composé d'une cuve formant le décanteur et, au-dessus de celle-ci, une cuve équipée d'une ou plusieurs cheminées en parallèles selon le débit d'effluent à traiter par l'installation.

Le procédé et l'installation selon l'invention permettent une conception modulaire. En effet, selon les débits d'effluent à traiter, comme l'installation fonctionne de préférence en continu, elle peut être dimensionnée de manière très précise en fonction des besoins.

La structure générale de l'installation permet une conception modulaire en fonction des débits d'effluent à traiter. L'installation permet une réalisation modulaire, par l'utilisation d'un certain type, unique, de cheminée qui, par le nombre de cheminées, permet dans l'installation son adaptation aux différents débits, d'autant plus que l'efficacité d'une cheminée correspond à certaines caractéristiques dimensionnelles de section et de hauteur et à un certain débit et que l'adaptation à des débits plus importants ne peut se faire efficacement par l'augmentation par exemple de la section d'une colonne mais par la multiplication des colonnes.

Le nombre de colonnes s'obtient ainsi en divisant le débit total par le débit d'une cheminée type.

Cela réduit considérablement le coût de la fabrication d'une telle installation.

### Dessins

La présente invention sera décrite ci-après de manière plus détaillée à l'aide de modes de réalisation représenté dans les dessins annexés dans lesquels :
- la figure 1 est une vue en coupe schématique d'une installation de base selon l'invention,
- la figure 2 est une vue en coupe schématique d'un second mode de réalisation de l'installation selon l'invention,
- la figure 3A est une vue en coupe schématique de la partie supérieure de cheminée d'une installation selon l'invention et
- la figure 3B est une vue de dessus correspondant à la figure 3A.

### Description de modes de réalisation de l'invention

L'invention concerne un procédé et une installation de séparation solide/liquide pour nettoyer l'effluent, c'est-à-dire des eaux polluées d'origine domestique ou industrielle, véhiculant une certaine charge polluante dissoute, colloïdale ou particulaire. Il s'agit de matières solides, de matières en suspension, d'huiles, d'hydrocarbures ou autres qui doivent être éliminées avant que l'effluent ne soit rejeté comme eau nettoyée.

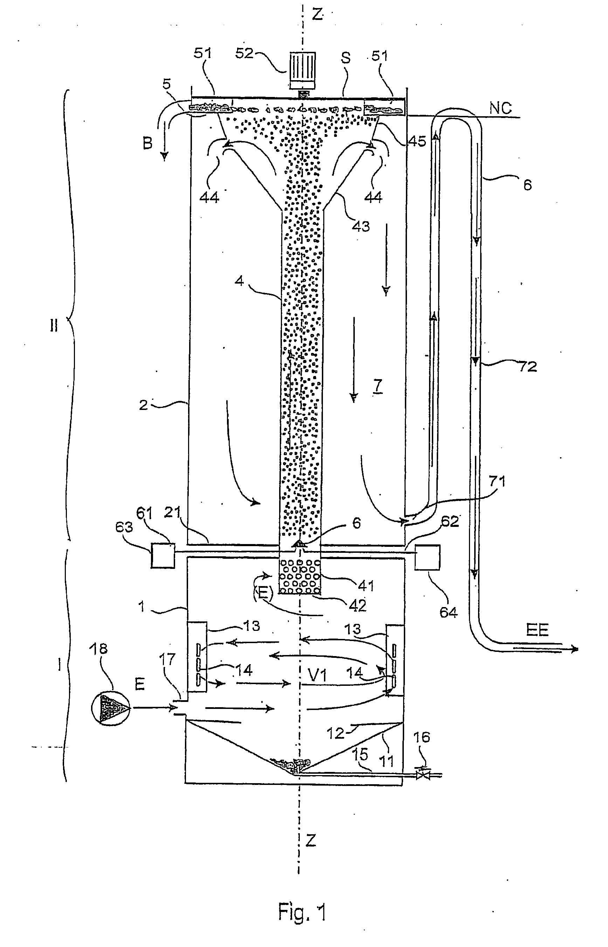

Dans la figure 1, le séparateur est représenté dans sa forme de réalisation la plus simple, c'est-à-dire avec un étage inférieur I dans lequel arrive l'effluent E pour subir une première séparation grossière, et passer dans un second étage II dans lequel s'effectue l'épuration proprement dite pour recueillir en sortie, de l'eau épurée EE susceptible d'être rejetée librement et des boues B que l'on collecte pour les traiter.

L'étage inférieur I se compose d'une première cuve 1 constituant un décanteur en partie basse de l'installation, surmonté de l'étage supérieur II formé d'une deuxième cuve 2 dans laquelle s'effectue le nettoyage de l'effluent pour recueillir l'eau épurée EE.

La cuve 1 du décanteur a une arrivée d'effluent 17 alimentée par une pompe 18 débouchant au-dessus d'un collecteur de boues en forme de cône renversé 11, surmonté d'une collerette 12 légèrement inclinée dans le sens descendant vers l'axe ZZ du cône. Le sommet du cône est relié à une évacuation des boues déposées au fond du collecteur, par une canalisation 15 équipée d'un dispositif d'extraction 16.

L'entrée d'effluent 17 au-dessus du collecteur de boues 11 se fait suivant un mouvement tangentiel de manière à induire une circulation en vortex dans cette tranche du décanteur au-dessus du collecteur de boues pour finaliser une coagulation dans le décanteur en amont de la cuve supérieure 2.

La paroi latérale de cette tranche formant une zone de vortex, au moins à mi-hauteur, est occupée par des pales anti-vortex 13 avec des ouïes verticales 14. Ces pales 13 freinent une partie du flux périphérique du vortex pour recueillir les particules les plus lourdes chargeant l'effluent, poussées vers la paroi pour les retenir mécaniquement et les faire se déposer dans le collecteur de boues 11 en plus des matières qui se séparent d'emblée.

La collerette 12 au-dessus du collecteur 11 évite que le jet d'effluent entrant ne soit perturbé et, en revanche, soit guidé ; cela évite également que le jet d'effluent ne perturbe les boues du collecteur 11 en permettant néanmoins aux matières solides ou aux flocons qui arrivent sur les pales 13 de descendre sur la collerette 12 pour glisser ensuite dans le collecteur de boues 11.

Dans la zone supérieure du décanteur, la veine d'effluent est calmée et séparée ainsi d'une partie de sa charge pour passer dans le second étage II du séparateur. Le mouvement résiduel du fluide à l'entrée du second étage II maintient l'homogénéisation de l'effluent.

Le second étage II se compose de la deuxième cuve 2 comportant, en son milieu, une cheminée 4 traversant le fond 21 de la cuve 2 pour déboucher par sa partie inférieure dans l'axe du décanteur et, par suite, arriver au-dessus et dans l'axe du vortex. L'entrée 41 de la cheminée 4 est formée par une surface perforée, de préférence sur la paroi latérale de la cheminée, le fond 42 étant bouché. Cette entrée 41 forme une sorte de crépine évitant que d'éventuelles particules de grandes dimensions n'arrivent dans la cheminée 4 et ne perturbent la séparation des particules fines. La cuve supérieure 2 repose sur la cuve inférieure 1.

En partie supérieure, la cheminée 4 débouche par une sortie évasée 43 de forme conique arrivant latéralement sur une surface horizontale 5 de dépose située sous le niveau NC de la cuve 2.

La base de la cheminée, au-dessus de l'entrée, est équipée d'un diffuseur 6 en forme de buse relié d'une part, à une arrivée d'eau à pression réglée 61 et d'autre part, à une arrivée d'air à pression réglée 62. Ces deux fluides se mélangent en amont de la buse 6 qui reçoit ainsi un mélange air/eau diffusé ensuite par la buse 6 à la base de la cheminée 4, au-dessus de l'entrée 41 qui débouche dans le dessus du décanteur 1.

L'injection du mélange air/eau par le diffuseur 6 dans la colonne d'effluent de la cheminée 4, crée un courant ascensionnel dans lequel les matières à séparer, s'agglutinent plus ou moins en formant des flocons pour finalement remonter jusqu'à la surface ou sous la surface du bain d'effluent dans la colonne. Les microbulles se dispersent dans l'effluent et se fixent aux graisses, agrégats graisseux, flocs de coagulation, particules légères pour migrer vers la surface S en partie haute de la cheminée 4 (ou de la cuve 2).

La sortie évasée 43 de la cheminée ralentit le flux ascensionnel du fait de l'augmentation progressive de la section disponible pour le flux. Néanmoins, les flocons entraînés par le fluide vecteur remontent sensiblement verticalement dans cette zone à circulation ralentie et l'eau épurée se sépare naturellement de cette colonne pour passer par des sorties 44 dans la chambre d'eau épurée 7 qui entoure la cheminée 4 dans la cuve 2. Cette chambre d'eau épurée 7 est reliée par une sortie 71, en partie basse, à un tube en col de cygne 72 qui permet de recueillir l'eau épurée EE.

Le débit d'effluent à travers le séparateur est pratiquement le débit fourni par la pompe d'alimentation 18, diminué du débit de matières lourdes évacuées par le collecteur de boues 11 et la canalisation 15. L'évacuation des boues par la canalisation 15 et le dispositif d'extraction 16 se fait de manière commandée, par exemple par détection du niveau de boues dans le col lecteur 11.

L'arrivée d'air est réglée par un régulateur de pression 64 qui fixe le niveau de pression à environ 0,5 bar. L'arrivée d'eau dans le mélangeur non représenté en amont du diffuseur 6 se fait à une pression de l'ordre de 2 bars réglée par un régulateur de pression 63.

Selon le mode de réalisation pratique représenté, le décanteur est constitué par une cuve inférieure 1, de préférence cylindrique de section circulaire, d'axe ZZ. Cette cuve 1 est surmontée de la cuve de l'étage supérieur ou cuve supérieure 2 également cylindrique circulaire d'axe ZZ dans laquelle se trouve la cheminée 4 avec son cône 43 en partie supérieure et la collerette périphérique 5 recueillant les flocons et gouttelettes de la charge séparée de l'effluent.

Un cône supérieur 45 vient sur le cône de sortie 43 ou est constitué par le prolongement de celui-ci ; il est muni de la sortie d'eau épurée 44. Cette sortie est, de préférence, répartie régulièrement à la périphérie pour le prélèvement d'eau épurée se fasse aussi régulièrement que possible, c'est-à-dire symétriquement par rapport à l'axe ZZ de la cheminée 4.

Cette sortie 44 se situe nettement en dessous de la couche de produits entraînés et séparés, flottant plus ou moins à la surface S du bain au-dessus de la colonne de la cheminée 4. L'eau nettoyée arrive dans la chambre d'eau 7 entourant la cheminée à l'intérieur de la cuve supérieure 2 qui peut également être un collecteur périphérique.

Au-dessus de la collerette 5 circule une racle mécanique 51, entraînée en rotation par un motoréducteur 52 installé au-dessus de la cuve supérieure 2, de manière à collecter et refouler la charge de produits séparés du liquide formant des boues 22 que l'on évacue par une sortie de boues. Les boues ainsi récupérées sont traitées. Il en est de même des boues récupérées en sortie du collecteur de boues 11.

Pour faciliter la description, la cuve inférieure 1 et la cuve supérieure 2 sont représentées comme distinctes, séparées par un intervalle par lequel passe la conduite d'eau réglée 61 et la conduite d'air réglée 62. En fait, ces conduites peuvent passer dans la cuve supérieure 2 pour déboucher à la base de la cheminée 4 dans le mélangeur en amont du diffuseur 6.

De façon plus détaillée, le séparateur solide/liquide dont la structure a été décrite ci-dessus, fonctionne en mettant en oeuvre le procédé général suivant :
On forme un mélange d'air sous pression réglée et d'eau sous pression réglée que l'on fait passer dans un diffuseur 6 en partie basse du bain d'effluent, pour y créer une colonne d'effluent à courant ascensionnel entraîné par le fluide vecteur sortant du diffuseur. Les microbulles émises par le diffuseur à partir du mélange air/eau sous pressions réglées se dispersent dans l'effluent et se fixent aux éléments constituant la charge de l'effluent, c'est-à-dire les particules, les graisses, les agrégats graisseux, les flocs de coagulation, les particules légères. Cette séparation est favorisée par la densité élevée de microbulles développées par le diffuseur à partir du mélange eau sous pression réglée/air sous pression réglée sans que ces microbulles ne tendent à la coalescence et ne présentent que des effets de paroi négligeables. Les microbulles formées de cette manière sont de dimensions extrêmement homogènes ce qui favorise leur stabilité et permet de conserver une densité élevée de microbulles tout au long de la colonne de fluide ou cheminée assurant l'efficacité du séparateur.

En partie haute du bain, on évacue la charge séparée de l'effluent. L'évacuation est favorisée par un ralentissement du mouvement ascensionnel de la colonne d'effluent pour calmer le flux en augmentant la section de la colonne de fluide et en laissant remonter les flocons séparés, jusqu'au niveau du bain. La colonne d'effluent à courant ascensionnel développée selon le procédé de l'invention est délimitée dans sa forme géométrique par un moyen matériel constituant une cheminée 4. L'eau épurée EE est extraite sous le niveau du bain.

Dans l'installation de la figure 1, l'effluent E refoulé par la pompe 18, arrive dans l'entrée 17 de la cuve 1 du décanteur, au-dessus du collecteur de boues 11 et de la collerette 12 qui ferme en partie le collecteur de boues 11. L'effluent E arrive dans le décanteur en créant un mouvement de circulation autour de l'axe ZZ. Ce mouvement de circulation forme une zone de vortex. Les courants périphériques du vortex, dans lesquels sont repoussées les parties les plus lourdes de la charge de l'effluent, arrivent au niveau des pales 13 qui viennent en saillie à partir de la paroi de la cuve 1. Les pales 13 en saillie ralentissent ou bloquent le courant périphérique de sorte que les charges lourdes, descendent sous l'effet de leur plus forte densité, le long des pales 13 et de la paroi du décanteur pour arriver sur la collerette et descendre de celle-ci dans le collecteur de boues. Les ouïes 14 permettent de maintenir un léger courant périphérique au niveau des pales pour alimenter les intervalles ainsi cloisonnés par les pales et recevoir les particules à déposer dans le collecteur de boues.

Au milieu du vortex suivant l'axe ZZ, la circulation de l'effluent E est relativement faible. L'effluent E remonte dans la cuve 1 pour arriver ensuite dans la cheminée 4 par les perforations de la paroi périphérique 41. Puis, l'effluent remonte dans la cheminée 4 selon un courant créé par le débit de la pompe d'alimentation. Dans ce courant, le diffuseur 6 injecte le mélange air/eau qu'il reçoit tout préparé.

L'ensemble du flux forme un mélange de bulles très fines favorisant la séparation et la formation de flocons, entraînés plus rapidement dans la colonne ascendante formée par la cheminée 4. Les phénomènes fluidiques complexes qui se développent dans cette colonne ascendante, favorisent l'agglomération des flocons et leur transport jusqu'à la surface de bain S.

Près de la sortie, dans la zone évasée 43, 44 terminant la cheminée 4, la vitesse de remontée du flux diminue progressivement de sorte que cette remontée ne perturbe pas le liquide dans la partie supérieure de la colonne dont le niveau NC est maintenu légèrement au-dessus de la surface de dépose 5 pour que les flocons, particules et, plus généralement la charge à séparer, puissent arriver sur la surface de dépose 5 d'où cette charge formant des boues est évacuée mécaniquement par le racleur rotatif 51 par la conduite de sortie 22 de boues B.

L'eau nettoyée est évacuée de la zone latérale du cône supérieur 45 au-dessus de la cheminée mais nettement en dessous de la couche de produits flottant à la surface du bain S.

La sortie d'eau nettoyée 44 débouche dans la chambre 7, ici périphérique, entourant la cheminée 4 dans la cuve 2 de l'étage supérieur II. Cette chambre 7 est fermée en partie supérieure et sa sortie 71 est en partie basse par la conduite en U, 22 formant un siphon de manière à définir le niveau supérieur du bain NC dans la cheminée 4 ce qui réduit au minimum l'eau qui peut sortir par la sortie de boues 22.

L'installation décrite ci-dessus correspond à un élément de base d'un séparateur. Les caractéristiques physiques (section, hauteur, angle du cône de sortie de la cheminée) sont des paramètres définis indépendamment du débit d'effluent pour avoir l'efficacité maximale. Cet élément de base correspond à un débit nominal. Pour traiter un débit supérieur au débit nominal, l'une des solutions consiste, dans le cadre de l'invention, à multiplier les cheminées dont le nombre correspond schématiquement au débit total à traiter par le débit nominal d'une cheminée de base.

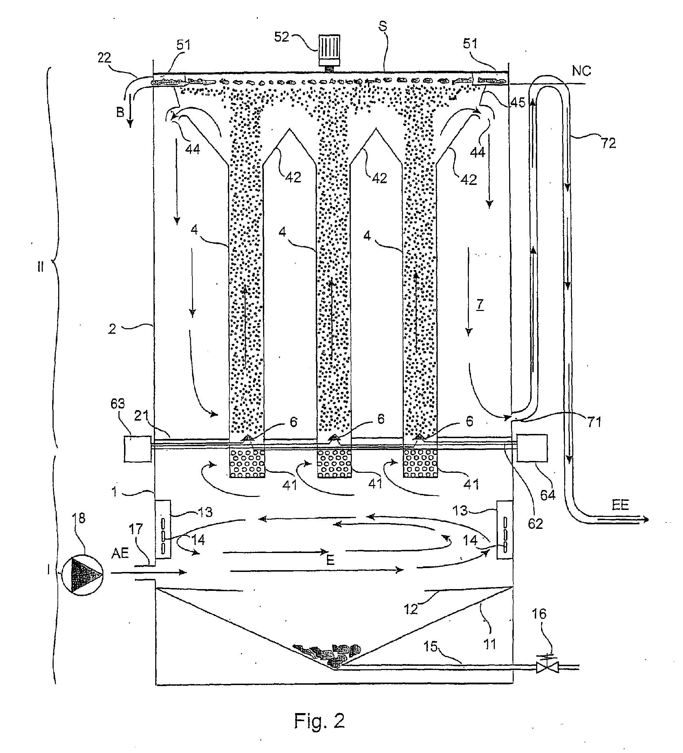

La figure 2 montre un séparateur solide/liquide pour une variante de réalisation destinée à un débit d'effluent plus important.

Cette installation se distingue de celle de la figure 1 par la multiplication des cheminées, par exemple dans les conditions indiquées ci-dessus, les autres éléments, aux dimensions près, étant les mêmes.

Cette installation sera décrite ci-après pour les parties qui la distinguent de celles de la figure 1, autrement que par la multiplication des éléments.

Pour désigner les éléments repris du mode de réalisation de base de la figure 1, on utilisera les mêmes références et la description détaillée déjà faite ne sera pas reprise.

Cette installation se distingue par un dimensionnement différent de la cuve inférieure 1 et de la cuve supérieure 2. La section globale des cuves est plus importante de manière à recevoir le nombre approprié de cheminées. La sortie des cheminées est également légèrement différente.

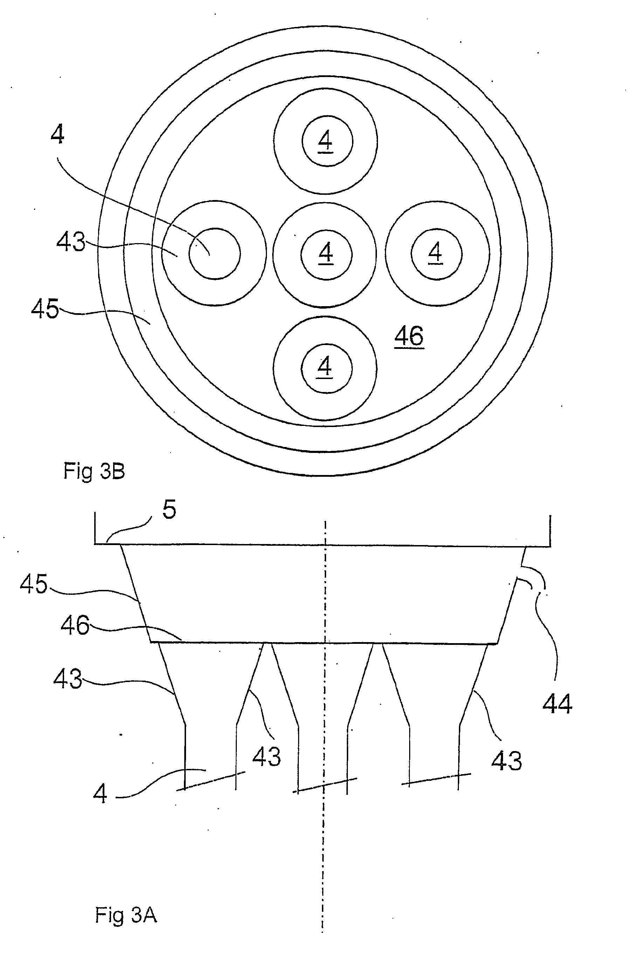

Ainsi et comme le montre par exemple la vue de côté de la figure 3A ou la vue de dessus de la figure 3B, ce séparateur solide/liquide comporte une cheminée centrale 4 entourée de cheminées 4 identiques ou semblables réparties concentriquement sur une couronne circulaire ;

Les cônes évasés 42 terminant la partie supérieure des cheminées 4 débouchent dans une plaque horizontale 46 située en dessous de la sortie d'eau nettoyée 44, elle-même en dessous de la couronne périphérique 5 de dépose de la charge flottant à la surface du bain S.

Les cheminées 4 sont entourées par le volume de la chambre d'eau nettoyée 7 comportant comme précédemment une sortie d'eau nettoyée 71 reliée à une conduite en U, 72 formant un col de cygne régulant le niveau du bain NC dans les cheminées 4. La chambre d'eau nettoyée 7 constitue un volume clos en partie supérieure pour permettre la régulation du niveau dans le bain (le volume des cheminées et la partie au-dessus des cheminées) pour l'évacuation des boues sur la surface de dépose 5 sans que cette évacuation ne se traduise par une trop forte sortie d'eau nettoyée et qui se mélange de nouveau aux boues.

La base de chacune des cheminées 4 est équipée d'un diffuseur 6 alimenté par un mélange d'eau et d'air sous pressions réglées fourni par un dispositif d'alimentation en eau réglée 63 et d'un dispositif d'alimentation en air réglé 64.

Les paramètres physiques tels que la pression réglée de l'eau et celle de l'air sont à priori les mêmes paramètres que ceux de l'installation de base avec une seule cheminée.

La figure 3A montre en vue partielle de côté, les cheminées 4 et la partie supérieure 43 de celles-ci. Ce schéma met en évidence la structure à plusieurs éléments de la partie supérieure de l'installation, au débouché des cheminées. Les cheminées se terminent par leur tronc de cône renversé 42, dont la grande base est tournée vers le haut. Cette grande base débouche dans la plaque 46 commune à toutes les cheminées 4, 42. La plaque 46 constitue elle-même la petite base d'un tronc de cône périphérique 45, qui se termine en partie supérieure par la collerette 5 de collecte des boues à la surface du bain S. Ce tronc de cône périphérique 45 est muni de la ou des sorties d'eau épurée 44 dont un exemple est représenté à la figure 3A. La vue de dessus de la figure 3B permet de comprendre la disposition des cheminées 4 et leur arrivée dans la plaque supérieure 45, au débouché des formes coniques 42 terminant les cheminées 4.

Pour ne pas compliquer la figure 2, la plaque 45 terminant les cheminées 4 n'a pas été figurée par un trait, selon les règles habituelles du dessin.

En fonction du débit d'effluent à traiter, l'installation est équipée d'un nombre approprié de cheminées 4, de préférence une cheminée centrale et un ou plusieurs ensembles de cheminées 4 complémentaires réparties de façon concentrique, l'installation ayant globalement une forme de cylindre à section circulaire.

Dans le cas d'une installation à une seule cheminée 4, il est intéressant de faire déboucher la sortie d'eau épurée directement dans un siphon qui règle le niveau du liquide au-dessus de la cheminée.

Dans le cas d'une installation de dimensions plus importantes avec plusieurs cheminées 4, il est plus simple de faire déboucher les sorties d'eau dans une chambre commune 7 d'où est prélevée l'eau épurée comme cela est représenté à la figure 2.

Ces différentes réalisations peuvent appliquer un concept modulaire, c'est-à-dire des cuves d'une certaine dimension pour s'adapter à une plage de débits pour lesquels l'installation utilise un nombre approprié de cheminées. Les cheminées 4 elles-mêmes peuvent avoir une réalisation uniforme pour simplifier la fabrication.

L'installation selon l'invention est d'un entretien particulièrement réduit puisque les seuls éléments susceptibles d'incidents sont la pompe d'alimentation 18 et les deux régulateurs d'alimentation en eau et en air 63, 64 ainsi que le motoréducteur 52 entraînant la racle 51 d'évacuation des boues en partie supérieure de l'installation. Ces différents équipements sont facilement accessibles puisqu'à l'extérieur de la cuve inférieure 1 et de la cuve supérieure 2.

## Revendications

1. Procédé de séparation solide/liquide pour nettoyer un effluent dans un bain, en faisant passer des bulles d'air dans l'effluent pour remonter à la surface du bain, les matières à séparer,
on évacue (5, 51, 22) la charge séparée de l'effluent dans la partie supérieure du bain,
**caractérisé en ce qu'**
- on forme un mélange d'air sous pression réglée et d'eau sous pression réglée (63, 64),
- on fait passer le mélange dans un diffuseur (6) en partie basse du bain d'effluent (4),
- on crée dans le bain, une colonne d'effluent à courant ascensionnel entraîné par le fluide vecteur sortant du diffuseur (6),
- on ralentit le mouvement ascensionnel de la colonne d'effluent en partie haute pour calmer le flux en augmentant la section de la colonne de fluide (42) et en laissant remonter les flocons séparés jusqu'au niveau du bain, et
- on extrait l'eau épurée (44) sous le niveau du bain (S).

2. Procédé de séparation solide/liquide selon la revendication 1,
**caractérisé en ce qu'**
on extrait l'eau épurée par un siphon pour maintenir le niveau du bain dans la colonne de fluide au-dessus de la surface de dépose des boues flottantes près de la surface du bain.

3. Procédé selon la revendication 1,
**caractérisé en ce qu'**
on règle la pression de l'air à un niveau inférieur à 0,5 bar et la pression de l'eau à environ 2 bars.

4. Séparateur solide-liquide, continu, tel que dégraisseur, formé d'une cuve recevant l'effluent chargé, pour entraîner par un mouvement ascensionnel de bulles d'air, les produits de l'effluent vers la surface du bain dans la cuve,
**caractérisé par**
- une cheminée (4) avec une entrée (41) à sa base recevant l'effluent et une sortie (42) dans sa partie supérieure,
- une entrée de fluide vecteur à la base de la cheminée (4), reliée à une alimentation en fluide vecteur (61, 62) qui est un mélange d'air sous pression réglée et d'eau sous pression réglée (63, 64), alimentant un diffuseur (6), pour créer une colonne d'effluent et de fluide vecteur animée d'un mouvement ascensionnel non turbulent, entraînant et agglutinant les produits chargeant l'effluent vers la surface (S) du bain dans la cuve (2),
- une sortie en partie haute de la cheminée (4) ayant
* une partie évasée (42),
* suivie d'une surface de dépose (5) des produits entraînés, sous le niveau (NC, S) du bain dans la cuve, au-dessus de la cheminée (4),
* une sortie d'eau nettoyée (44) sous la surface de dépose (5) des produits.

5. Séparateur selon la revendication 4,
**caractérisé en ce qu'**
il comporte un décanteur ayant une cuve (1) à l'arrivée (17) de l'effluent (E), de type vortex, dont le fond est un collecteur (11) recueillant les matières solides les plus lourdes sous forme de boues, ce décanteur étant relié par sa partie haute, à l'entrée (41) de la cheminée (4) au-dessus du centre du vortex.

6. Séparateur selon la revendication 5,
**caractérisé en ce que**
la cuve (1) du décanteur est équipée, sur sa paroi au-dessus de l'arrivée (17) de l'effluent, de pales anti-vortex (13) , notamment munies d'ouïes (14).

7. Séparateur selon la revendication 4,
**caractérisé en ce que**
la sortie d'eau nettoyée (44, 7, 71) se fait par un siphon (71) maintenant le niveau (NC) du bain dans la cheminée (4) au-dessus de la surface de dépose (5) des boues flottantes près de la surface du bain (S).

8. Séparateur selon les revendications 4 et 5,
**caractérisé en ce que**
la cheminée (4) est un élément tubulaire dont la partie inférieure (41), perforée, débouche dans la cuve (1) du décanteur dans la zone d'effluent stabilisé et homogénéisé et la sortie en partie supérieure de la cheminée (4), présente une forme évasée, conique (42) pour ralentir le courant ascensionnel à la sortie de la cheminée et favoriser le regroupement des matières séparées dans la colonne de la cheminée, vers la sortie de boues (5, 22).

9. Séparateur selon la revendication 4,
**caractérisé en ce que**
l'arrivée d'eau sous pression est munie d'un régulateur (64) et l'arrivée d'air sous pression est munie d'un régulateur de pression (63), ces deux régulateurs étant indépendants, l'arrivée d'eau étant notamment réglée à une pression d'environ 2 bars et le régulateur de l'arrivée d'air est réglé à une pression beaucoup plus faible, inférieure à 0,5 bar.

10. Séparateur selon la revendication 4,
**caractérisé en ce qu'**
il est composé d'une cuve (1) formant le décanteur et, au-dessus de celle-ci, une cuve (2) équipée d'une ou plusieurs cheminées (4) en parallèles selon le débit d'effluent à traiter.

## Claims

1. Solid/liquid separation method for cleaning an effluent in a bath by passing bubbles of air into the effluent in order to raise to the surface of the bath the materials to be separated,
the load separated from the effluent in the upper portion of the bath is discharged (5, 51, 22),
**characterised in that**
- there is formed a mixture of air under controlled pressure and water under controlled pressure (63, 64),
- the mixture is passed into a diffuser (6) at the lower portion of the bath of effluent (4),
- there is formed in the bath a column of effluent with an upward current carried by the carrier fluid being discharged from the diffuser (6),
- the upward movement of the column of effluent is slowed down at the upper portion in order to calm the flow by increasing the cross-section of the column of fluid (42) and by allowing the separated flakes to rise to the level of the bath, and
- the purified water (44) is extracted below the level of the bath (S).

2. Solid/liquid separation method according to claim 1,
**characterised in that**
the purified water is extracted via a siphon in order to keep the level of the bath in the column of fluid above the surface for depositing floating sludge close to the surface of the bath.

3. Method according to claim 1,
**characterised in that**
the pressure of the air is controlled at a level less than 0.5 bar and the pressure of the water at approximately 2 bar.

4. Continuous solid/liquid separator, such as a degreaser, formed by a vessel which receives the charged effluent, in order to drive, via an upward movement of bubbles of air, the products of the effluent towards the surface of the bath in the vessel,
**characterised by**
- a chimney (4) with an inlet (41) at the base thereof receiving the effluent and an outlet (42) in the upper portion thereof,
- an inlet for carrier fluid at the base of the chimney (4), connected to a supply of carrier fluid (61, 62) which is a mixture of air under controlled pressure and water under controlled pressure (63, 64), supplying a diffuser (6), in order to create a column or effluent and carrier fluid which is caused to move upwards in a non-turbulent manner, driving and blinding the products with which the effluent is charged towards the surface (S) of the bath in the vessel (2),
- an outlet at the upper portion of the chimney (4) having
* a flared portion (42),
* followed by a surface (5) for depositing the carried products, below the level (NC, S) of the bath in the vessel, above the chimney (4),
* a cleaned water outlet (44) below the surface (5) for depositing products.

5. Separator according to claim 4,
**characterised in that**
it comprises a decanter which has a vessel (1) at the inlet (17) of the effluent (E), of the vortex type, whose base is a collector (11) which collects the heaviest solid materials in the form of sludge, this decanter being connected with the upper portion thereof to the inlet (41) of the chimney (4) above the centre of the vortex.

6. Separator according to claim 5,
**characterised in that**
the vessel (1) of the decanter is provided, on the wall thereof above the inlet (17) of the effluent, with anti-vortex blades (13), in particular provided with intakes (14).

7. Separator according to claim 4,
**characterised in that**
the cleaned water outlet (44, 7, 71) is formed by a siphon (71) which keeps the level (NC) of the bath in the chimney (4) above the surface (5) for depositing floating sludge close to the surface of the bath (S).

8. Separator according to claims 4 and 5,
**characterised in that**
the chimney (4) is a tubular element whose perforated lower portion (41) opens in the vessel (1) of the decanter in the zone of stabilised and homogenised effluent and the outlet at the upper portion of the chimney (4) has a flared conical shape (42) in order to slow the upward current at the outlet of the chimney and to promote the grouping of the materials separated in the column of the chimney, towards the sludge outlet (5, 22).

9. Separator according to claim 4,
**characterised in that**
the pressurised water inlet is provided with a regulator (64) and the pressurised air inlet is provided with a pressure regulator (63), these two regulators being independent, the water inlet being in particular controlled at a pressure or approximately 2 bar and the regulator of the air inlet is controlled at a much lower pressure, less than 0.5 bar.

10. Separator according to claim 4,
**characterised in that** it is composed of a vessel (1) which forms the decanter and, thereabove, a vessel (2) which is provided with one or more chimneys (4) in parallel depending on the flow rate of effluent to be processed.

## Patentansprüche

1. Verfahren zur Flüssigkeits-/Feststofftrennung, um Abwasser in einem Bad zu reinigen, indem Luftblasen in das Abwasser eingeleitet werden, um die abzutrennenden Substanzen an die Oberfläche des Bads zu fördern, und bei dem die vom Abwasser abgetrennten Verunreinigungen aus dem oberen Teil des Bades ausgeschieden werden (5, 51, 22),
**dadurch gekennzeichnet, dass**
- eine Mischung aus unter geregeltem Druck stehender Luft und unter geregeltem Druck stehenden Wasser gebildet wird (63, 64),
- die Mischung in einen Diffusor (6) im unteren Teil des Abwasserbades (4) geleitet wird,
- in dem Bad eine Abwassersäule mit aufsteigender Strömung erzeugt wird, die von der aus dem Diffusor (6) austretenden Trägerflüssigkeit angetrieben wird,
- die aussteigende Bewegung der Abwassersäule im oberen Teil verlangsamt wird, um die Strömung zu beruhigen, indem der Querschnitt der Flüssigkeitssäule (43) vergrößert wird und man die abgetrennten Flocken bis zum Spiegel des Bads aufsteigen lässt und
- das gereinigte Wasser (44) unter dem Badspiegel (S) herausgeleitet wird.

2. Verfahren zur Flüssigkeits-/Feststofftrennung nach Anspruch 1, **dadurch gekennzeichnet, dass** das gereinigte Wasser durch einen Siphon herausgeleitet wird, um den Badspiegel in der Flüssigkeitssäule über der Fläche für die Ablagerung der schwimmenden Schlämme nahe der Badoberfläche zu halten.

3. Verfahren nach Anspruch 1, **dadurch gekennzeichnet, dass** der Druck der Luft auf eine Höhe kleiner als 0,5 bar und der Druck des Wassers auf ungefähr 2 bar eingestellt ist.

4. Trennvorrichtung zur kontinuierlichen Flüssigkeits-/Feststofftrennung, wie z. B. Fettabscheider, bestehend aus einem das belastete Abwasser aufnehmenden Behälters um die Substanzen im Abwasser durch eine Aufwärtsbewegung von Luftblasen bis zur Oberfläche des Bades im Behälter mitzunehmen, **gekennzeichnet durch**
- einen Kamin (4) mit einem Eingang (41) für das Abwasser an seinem unteren Ende und einem Ausgang (43) an seinem oberen Teil,
- einen Einlass für die Trägerflüssigkeit am unteren Ende des Kamins (4), verbunden mit einer Einrichtung zur Versorgung mit Trägerflüssigkeit (61, 62), bei der es sich um eine Mischung aus unter geregeltem Druck stehender Luft und unter geregeltem Druck stehenden Wassers (63, 64) handelt, die einem Diffusor (6) zugeführt wird, um eine Säule aus Abwasser und und Trägerflüssigkeit zu erzeugen, die mit einer nicht turbulenten Bewegung nach oben steigt und die die das Abwasser belastenden Substanzen bis zur Oberfläche (S) des Bades im Behälter (2) mitnimmt und verklumpt,
- einen Ausgang im oberen Teil des Kamins (4) mit
* einem trichterförmigen Abschnitt (43),
* gefolgt von einer Fläche (5) über dem Kamin (4), unterhalb des Badspiegels (NC, S), zur Ablagerung mitgeführter Substanzen, und
* einer Austrittsöffnung (44) für das gereinigte Wasser unter der Ablagerungsfläche (5) für die Substanzen.

5. Trennvorrichtung nach Anspruch 4, **dadurch gekennzeichnet, dass** sie einen Schwereabscheider vom Typ Vortex mit einem Behälter (1) mit einem Zulauf (17) für das Abwasser (E) aufweist, dessen Boden ein die schwersten Feststoffe in Form von Schlämmen aufnehmendes Auffangbecken (11) bildet, wobei dieser Schwereabscheider an seinem oberen Teil über dem Zentrum des Vortex mit dem Einfang (41) des Kamins (4) verbunden ist.

6. Trennvorrichtung nach Anspruch 5, **dadurch gekennzeichnet, dass** der Behälter (1) des Schwereabscheiders an seiner Wandung über dem Zulauf (17) des Abwassers mit insbesondere mit Absaugöffnungen (14) versehenen Anti-Vortex-Propellern (13) ausgestattet ist.

7. Trennvorrichtung nach Anspruch 4, **dadurch gekennzeichnet, dass** zum Abfließen des gereinigten Wassers (44, 7, 71) ein Siphon (71) vorgesehen ist, durch den die Höhe (NC) des Bades im Kamin (4) über der Fläche (5) für die Ablagerung der schwimmenden Schlämme nahe der Oberfläche des Bades (S) aufrechterhalten wird.

8. Trennvorrichtung nach den Ansprüchen 4 und 5, **dadurch gekennzeichnet, dass** der Kamin (4) ein rohrförmiges Element ist, dessen unterer, durchlöcherter Teil (41) in den Behälter (1) des Schwereabscheiders im Bereich des stabilisierten und homogenisierten Abwassers mündet, und dass der Ausgang im oberen Teil des Kamins (4) eine trichterförmig-konische Form (43) aufweist, um die aufsteigende Strömung am Ausgang des Kamins zu verlangsamen und das Zusammenführen der in der Kaminsäule getrennten Substanzen hin zum Schlammaustritt (5, 22) zu begünstigen.

9. Trennvorrichtung nach Anspruch 4, **dadurch gekennzeichnet, dass** die Zuführung von unter Druck stehendem Wasser mit einem Druckregler (64) und die Zuführung von unter Druck stehender Luft mit einem Druckregler (63) ausgestattet sind, wobei diese beiden Regler voneinander unabhängig sind und insbesondere die Zuführung von Wasser auf einen Druck von ungefähr 2 bar und der Regler für den Zuführung von Luft auf einen viel geringeren Druck, nämlich kleiner als 0,5 bar eingestellt ist.

10. Trennvorrichtung nach Anspruch 4, **dadurch gekennzeichnet, dass** sie aus einem den Schwereabscheider bildenden Behälter (1) und einem Behälter (2) darüber besteht, welcher entsprechend der Menge an zu behandelndem Abwasser mit einem oder mehreren Kaminen (4) nebeneinander ausgestattet ist.
